# EUROPEAN PATENT SPECIFICATION

(11) **EP 1 595 669 B1**
(45) Date of publication and mention of the grant of the patent: **19.12.2007**
(21) Application number: 05103714.1
(22) Date of filing: 03.05.2005
(51) Int. Cl.: B29B 7/42, B29B 7/72, B29B 7/80

(54) **Device and method for cleaning a low-pressure mixing chamber, particularly for polyurethane**
Vorrichtung und Verfahren zur Reinigung einer Niederdruckmischkammer, insbesondere für Polyurethan
Dispositif et procédé de nettoyage d'une chambre de mélange basse pression, en particulier pour polyuréthane

(30) Priority: 11.05.2004 IT PD20040120
(43) Date of publication of application: 16.11.2005
(73) Proprietor: Main Group Corporation S.r.l., 35129 Padova (IT)
(72) Inventor: LORENZIN, Lorenzo, 35031, ABANO TERME PD (IT)
(74) Representative: Modiano, Micaela Nadia

(56) References cited:
- DE-C1- 4 111 458
- US-A- 3 752 449
- US-A- 5 770 141

## Description

The present invention relates to a device for cleaning a low-pressure mixing chamber particularly for polyurethane.

As it is known, the synthesis of polyurethane products by low-pressure foaming comprises a mixing of isocyanate and polyol, performed by means of an agitator inside a mixing chamber.

Such agitator is generally constituted by a mixing screw that rotates at high speed.

Residues of the reaction of the components remain deposited at the outlet of the mixed components, on the internal walls of the mixing chamber and on the crests of the thread of the screw, and must be eliminated in order to return the mixing apparatus to optimum operating conditions.

This cleaning is performed with a cleaning device.

Currently known cleaning devices for a low-pressure mixing chamber generally comprise the mixing screw itself, actuated by the same motorization means that turn it for mixing.

The motorization means are rigidly coupled to a slider, which supports them on an advancement guide.

The slider is moved by means for positioning the screw, now with a cleaning function instead of a mixing function, inside the mixing chamber.

During the cleaning step, the screw, which is generally frustum-shaped, is moved almost into contact with the internal walls of the mixing chamber, which is correspondingly frustum-shaped, so that by turning at high speed it removes the film of reacted material both from the internal walls and from the crests of the thread.

At the end of such a cleaning step, a new step for injecting the two components, polyol and isocyanate, occurs.

Periodically, and not after each injection, it is convenient to perform accurate cleaning of the internal walls of the mixing chamber.

This operation is generally performed manually by an operator, by means of suitable tool known as scraper.

These currently known cleaning devices and methods, while being used extensively with sufficient effectiveness in existing low-pressure foaming systems, have aspects that can be improved.

With these known devices, the position of the screw with respect to the mixing chamber during the cleaning step is in fact set by means of a mechanical adjustment performed by an operator.

This position is reached by means of a fluid-operated actuator, which supports the cleaning device.

If the operator accidentally sets an incorrect position for the screw, or improperly starts the advancement of the screw toward the mixing chamber, there is a high risk that such screw will advance inside the mixing chamber until it scrapes against the internal walls of the chamber or even bites into them, with consequent severe damage to the integrity of the screw, of the bearings that support the screw in its rotation and of the walls of the chamber, not to mention the propagation of vibrations, by means of the chamber and the slider to which the screw is fixed, to all the connected components of the foaming system.

Document US-A-3 752 449 discloses an apparatus in accordance with the preamble of claim 1.

The aim of the present invention is to provide a cleaning device for a low-pressure mixing chamber, particularly for polyurethane, which is capable of obviating the problems and drawbacks of known types of device.

Within this aim, an object of the present invention is to provide a cleaning device that is protected against incorrect or accidental maneuvers of an operator.

Another object of the present invention is to provide a cleaning device that increases the durability of the bearings that support the screw and at the same time reduces the wear of said screw.

Another object of the present invention is to provide a cleaning device that is capable of adapting automatically to screws having a different degree of wear.

Another object of the present invention is to provide a cleaning device that can be installed easily in known types of low-pressure foaming apparatus.

Another object of the present invention is to provide a cleaning device that can also be installed with tools suitable for periodically cleaning the mixing chamber, such as a scraper or the like.

Another object of the present invention is to provide a cleaning device for a low-pressure mixing chamber particularly for polyurethane that can be manufactured cheaply with known systems and technologies.

This aim and these and other objects that will become better apparent hereinafter are achieved by a cleaning device in accordance with claim 1 for a low-pressure mixing chamber particularly for polyurethane, of the type that comprises a conical mixing screw, which is actuated rotationally by motorization means rigidly coupled to a slider, which supports them on an advancement guide, said slider being associated with means for positioning said screw inside a mixing chamber, between a retracted mixing position and an advanced cleaning position, said cleaning device being characterized in that at least one of the following means is associated with said positioning means:
- means for measuring the axial thrust of said screw on the residues of reacted material that are present on the internal walls of said mixing chamber;
- means for measuring the torque generated by said motorization means for actuating said cleaning screw,
means being provided for detecting the position of said screw in the point where the axial thrust of the screw and/or the torque generated by the motorization means are/is highest, said position detection means and said at least one of the axial thrust measuring means and the torque measuring means being interfaced with means for comparing the measured values of position, axial thrust and/or torque of the motorization means and the preset values of position, axial thrust and/or torque, and with control and feedback means, which are adapted, if the measured axial thrust and/or torque are/is not lower than the respective preset limit value, to manage said positioning means in order to return said slider to a position in which the axial thrust of the screw and the torque generated by said motorization means are lower than the respective preset limit values.

A method of cleaning a low-pressure mixing chamber is disclosed in claim 11.

Further characteristics and advantages of the present invention will become better apparent from the following detailed description of a preferred but not exclusive embodiment thereof, illustrated by way of nonlimiting example in the accompanying drawings, wherein:

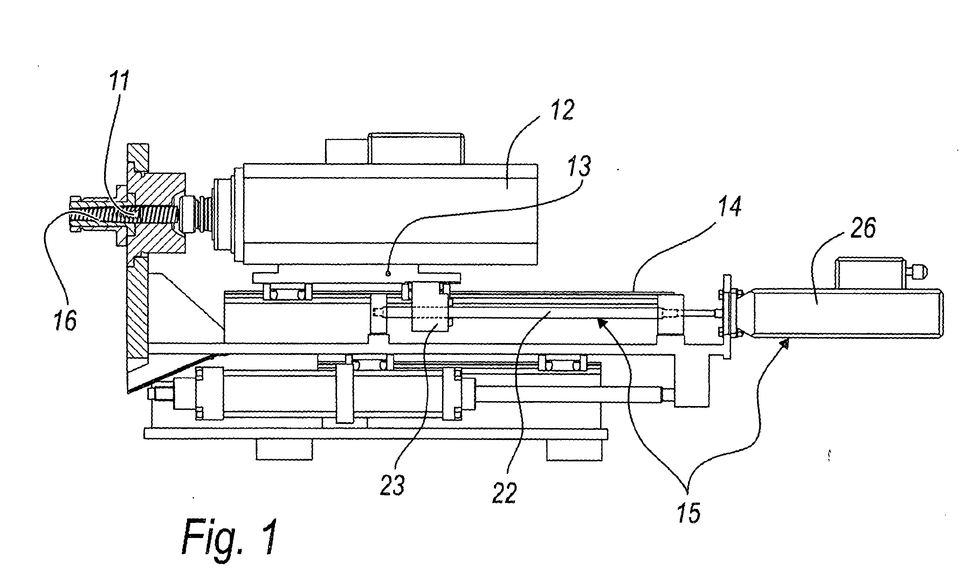

Figure 1 is a partially sectional side view of a cleaning device according to the invention;

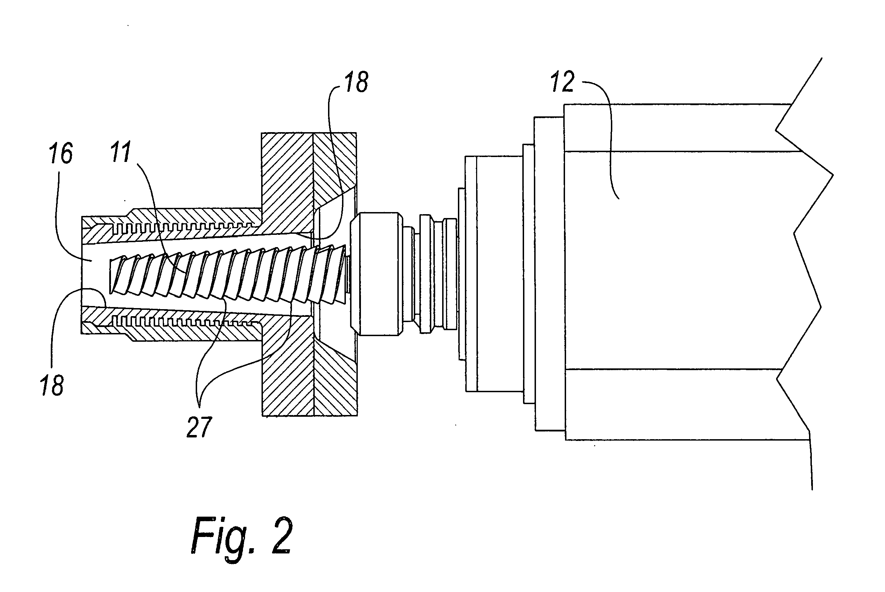

Figure 2 is a side sectional view of a detail of a cleaning device according to the invention;
Figure 3 is a view of a first constructive diagram of a cleaning device according to the invention;
Figure 4 is a view of a second constructive diagram of a cleaning device according to the invention;
Figure 5 is a view of a cleaning device according to the invention in a different embodiment.

With reference to the figures, a cleaning device for a low-pressure mixing chamber particularly for polyurethane according to the invention is generally designated by the reference numeral 10.

The device 10 comprises a conical mixing screw 11, which is actuated by motorization means 12, which are rigidly coupled to a slider 13, which supports them on an advancement guide 14.

The screw 11 is designed to mix the components of the polyurethane within a mixing chamber 16 but also to act as a cleaning screw.

The mixing chamber 16 matches the frustum-like shape of the screw 11.

The slider 13 is moved by means 15 for positioning the screw 11 inside the mixing chamber 16 between a retracted mixing position and an advanced cleaning position.

The following means are associated with the cleaning means 15:
- means for measuring the axial thrust 17 of the screw 11 on the residues of reacted material that are present on the internal walls 18 of the mixing chamber 16;
- means 24 for measuring the torque generated by the motorization means 12 to actuate the screw 11.

There are also means 19 for detecting the position of the screw 11 in the point where the axial thrust of the screw 11 and/or the torque generated by the motorization means 12 is highest.

The axial thrust measurement means 17, the torque measurement means 24 and the position detection means 19 are interfaced with means 20 for comparing the measured values of axial thrust, torque and position and the preset limit values of axial thrust, torque and position.

The comparison means 20 are correlated with control and feedback means 21 a, which are suitable, if the measured axial thrust and/or the measured torque are/is not lower than the corresponding preset limit value, to manage the positioning means 15 in order to return the slider 13 to a position in which the axial thrust of the screw 11 and the torque generated by the motorization means 12 are lower than the respective preset limit values.

These positioning means 15 are provided by an electric servomotor 26, generally of the type known as brushless, which is functionally connected to a ballscrew 22, in which the lead screw 23 is rigidly coupled to the slider 13.

The means 17 for measuring the axial thrust of the screw 11 act by detecting the energy absorption of the servomotor, since said axial thrust of the screw 11 is directly proportional to the moment generated by said servomotor for the advancement of the slider 13 and therefore of the screw 11.

The means 19 for detecting the position of the screw 11 are constituted by an encoder, which is integrated in the brushless servomotor.

The detection means 19 may also be constituted by a resolver, which is also integrated into the servomotor.

The torque measurement means 24 are interfaced with the comparison means 20, which in turn are connected to additional control means 21b.

The motorization means 12 are constituted by an electric spindle with a high-frequency asynchronous motor, which is suitable to turn the screw 11 and, as mentioned, is fixed to the slider 13.

Additional control means 21b for the motorization means 12 are further provided.

The comparison means 20, the control and feedback means 21a and the additional control means 21b are integrated in a PLC control unit 25 of a per se known and commercially available type.

The operation of a cleaning device 10 according to the invention is as follows.

When a cleaning step starts, the servomotor 26 of the positioning means 15 turns the ballscrew 22, so that the lead screw 23 moves forward the slider 13 and the electric spindle 12 with it, and therefore the screw 11.

Once the screw 11 has reached the cleaning position in the mixing chamber 16, such screw, by means of the crests 27 of the thread, starts to remove the residues of reacted material from the internal walls 18 of the chamber 16.

During said cleaning step, the screw 11 in a first case may encounter difficulties in advancement or, in a second case, may be braked in its rotary motion by particularly tough residues of reactive material.

In the first case, if the means 17 for measuring axial thrust send to the comparison means 20 a value of the energy absorption of the servomotor 26 that is higher than, or equal to, the set limit value, the control unit 25 acts by means of the control and feedback means 21a so that the servomotor 26 reverses its rotation, accordingly causing the retraction of the slider 13 by a predefined extent and returning the value of the absorbed energy and therefore of the axial thrust within the preset upper limit value.

The position of the slider 13 in which the servomotor 26 exceeds the limit value of absorbed energy is recorded by the position detection means 19, i.e., by the encoder (or resolver) of the servomotor 26.

This position is stored by the control unit 25, and in this position the torque applied at that moment by the electric spindle 12 to actuate the screw 11 is also detected by the torque measurement means 24.

Once the slider 13 has retracted by the predefined extent, and therefore the energy absorption has returned below the limit value, the servomotor 26 resumes the advancement of the slider 13 and of the screw 11 with it so as to push inside the chamber 14, returning it to act on the residues.

In the second case, if the means 24 for measuring the torque generated by the electric spindle 12 send to the comparison means 20 a value that is higher than the limit value for the measured parameter, the control unit 25 acts by way of the control and feedback means 21 a so that the servomotor 26 reverses its rotation, in this case also causing the retraction of the slider 13 by the predefined extent, so that the value of the energy absorbed by the electric spindle 12, and therefore of the torque that it generates, returns within the preset upper limit value.

In both cases, the device 10 is managed by the control unit 25 so that during the cleaning step the slider 13, on which the electric spindle 12 with the screw 11 is installed, oscillates and advances up to a limit value either of the axial thrust generated by the servomotor 26 or of the torque generated by the electric spindle 12, and retracts by a preset extent.

The axial thrust and torque values within which a device according to the invention described here operates by way of example are 0 to 2500 N for the axial thrust of the screw 11 and 0 to 10 N/m for the torque generated by the electric spindle 26.

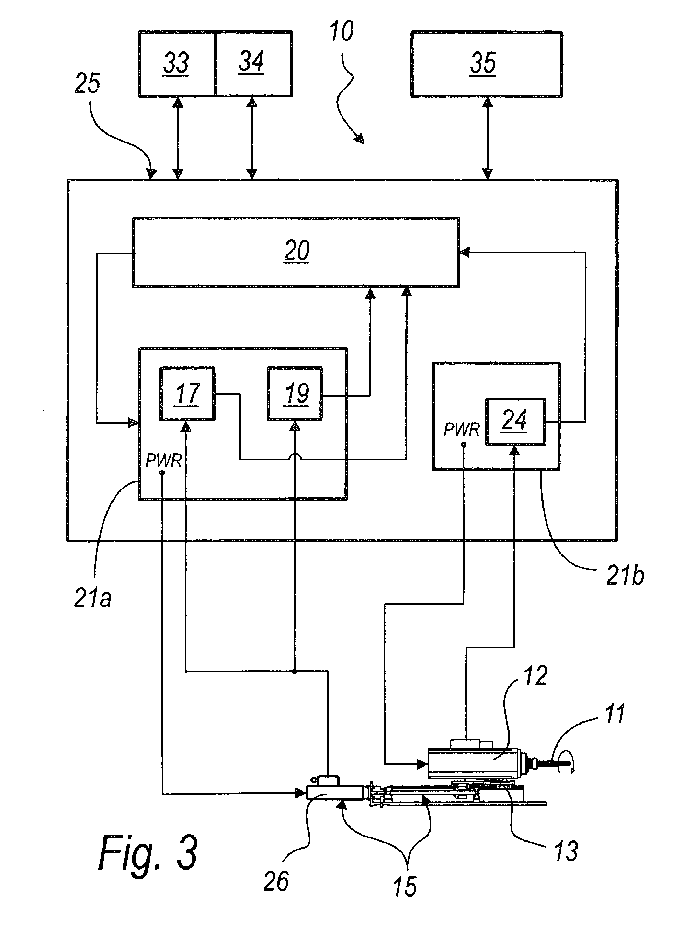

Conveniently, the control unit 25 that combines the comparison means 20, the control and feedback means 21a and the control means 21b is defined by an element that is not integrated in the electrical cabinet that generally constitutes the panel 35 for managing the entire foaming system, as shown schematically in Figure 3.

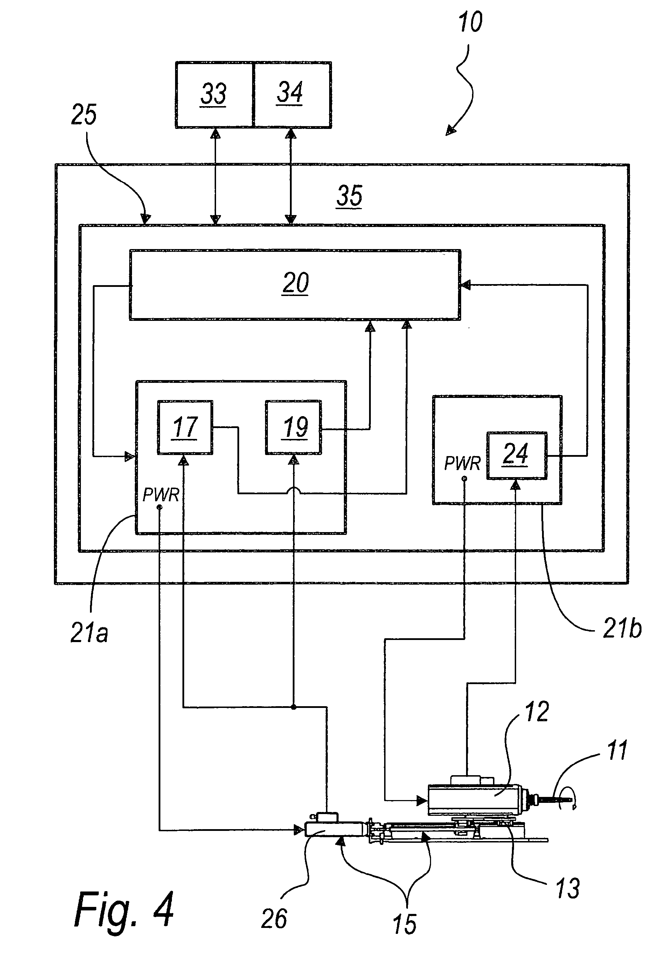

The diagram of Figure 3, like the diagram of Figure 4, in fact shows the local inputs 33 and the local outputs 34, these two terms being used to reference all the other parameters, in addition to the ones described here, that the control unit 25 must process for the operation of the apparatus as a whole.

Equally advantageously, a second constructive diagram, shown in Figure 4, provides the control unit 25 by means of an element that is integrated in the electrical cabinet that constitutes the panel 35 for managing the entire foaming apparatus.

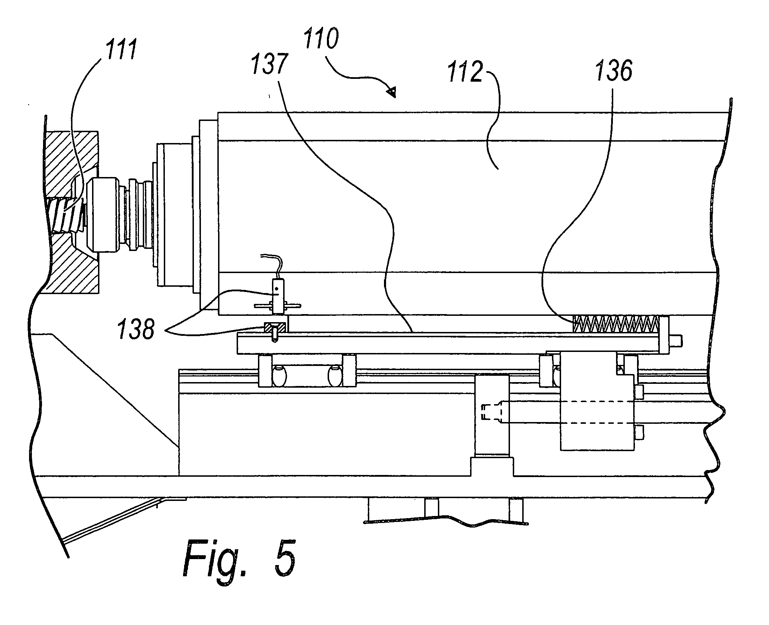

A different embodiment of a cleaning device according to the invention is shown in Figure 5 and is generally designated by the reference numeral 110 therein.

In this second embodiment, means 137 for relative sliding are provided between the motorization means 112 and the slider 113, and elastic safety means 136, suitable to protect the integrity of the screw 111, are associated with said means.

The elastic safety means 136 are constituted by at least one compression spring, which is interposed between the base of the motorization means 112 and the slider 113.

The at least one spring is suitable to be compressed if the screw 111 and the motorization means 113 that supports it stop their advancement inside the mixing chamber 116.

The yielding of the spring as a consequence of the jamming of the screw 11 prevents the screw from being damaged for example due to incorrect operation of the control and feedback means 21a.

In any case, a position sensor 138 is associated with the elastic safety means 136 in order to detect the movement of the motorization means 112 with respect to the slider 113.

The position sensor 138 is interfaced with the additional control means 21b and with the comparison means 20.

The provision of a mechanical control in parallel with the electronic and computerized control means makes the device even safer and more reliable.

The device 10 and 110 according to the invention is described here in an embodiment that is suitable for horizontal injection-molding systems, but the device 10 and 110 can also be used in a vertical installation, such as a self-cleaning low-pressure polyurethane pouring apparatus.

In practice it has been found that the invention thus described solves the problems noted in known types of cleaning device for a low-pressure mixing chamber particularly for polyurethane.

In particular, the present invention provides a cleaning device that is protected against incorrect or accidental maneuvers of an operator.

Once the limit value for the axial thrust of the screw in the mixing chamber and the limit value of the torque generated by the electric spindle that turns the screw have been preset, the device in fact manages autonomously the advancement and retraction of the screw without requiring operator intervention.

For the same reasons described above, the present invention provides a cleaning device that allows to use sequentially screws that have different degrees of wear.

Moreover, the present invention provides a cleaning device that increases the life of the bearings that support the screw and at the same time reduces the wear of the screw.

Since in the presence of an overload in terms of axial thrust or torque the screw is retracted, the bearings of the screw are in fact protected against excessive stress, caused for example by the impact of the screw against the walls of the mixing chamber.

The fact that the device according to the invention prevents the screw from making contact with the internal walls of the mixing chamber also protects the screw against otherwise rapid wear.

Therefore, self-learning of the correct cleaning position allows longer life of the cleaning screws, which as mentioned first of all act mainly as mixing screws.

Further, the present invention provides a cleaning device that can be fitted also with tools suitable to periodically clean the mixing chamber, such as a scraper or the like.

It is in fact sufficient to replace the screw with another tool and reset the control unit 25 with other axial thrust and torque parameters, in order to adapt them to the characteristics of the installed tool, and the device according to the invention cleans the mixing chamber according to what has been described above.

Moreover, the present invention provides a cleaning device that can also be installed easily on known types of low-pressure foaming apparatus.

Moreover, the present invention provides a cleaning device for a low-pressure mixing chamber particularly for polyurethane that can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A cleaning device for a low-pressure mixing chamber particularly for polyurethane, of the type that comprises a conical mixing screw (11;111), which is actuated rotationally by motorization means (12;112) rigidly coupled to a slider (13;113), which supports them on an advancement guide (14), said slider (13;113) being associated with means (15) for positioning said screw (11;111) inside a mixing chamber (16), between a retracted mixing position and an advanced cleaning position, said cleaning device (10) being **characterized in that** at least one of the following means is associated with said positioning means (15):
- means for measuring the axial thrust (17) of said screw (11;111) on the residues of reacted material that are present on the internal walls (18) of said mixing chamber (16);
- means (24) for measuring the torque generated by said motorization means (12;112) for actuating said cleaning screw (11;111),
means (19) being provided for detecting the position of said screw (11;111) in the point where the axial thrust of the screw (11;111) and/or the torque generated by the motorization means (12;112) are/is highest, said position detection means (19) and said at least one of the axial thrust measuring means (17) and the torque measuring means (24) being interfaced with comparison means (20) for comparing the measured values of position, axial thrust and/or torque of the motorization means (12;112) with the preset limit values of position, axial thrust and/or torque, and with control and feedback means (21 a), which are adapted, if the measured axial thrust and/or torque are/is not lower than the respective preset limit value, to manage said positioning means (15) in order to return said slider (13;113) to a position in which the axial thrust of the screw (11;111) and the torque generated by said motorization means (12;112) are lower than the respective preset limit values.

2. The cleaning device according to claim 1, **characterized in that** said cleaning screw (11;111) is substantially frustum-shaped and is also adapted to mix the components of the polyurethane inside said mixing chamber (16).

3. The cleaning device according to claim 1, **characterized in that** said motorization means (12;112) are constituted by an electric spindle, which is suitable to turn said screw (11;111) and is fixed to said slider (13;113).

4. The cleaning device according to claim 1, **characterized in that** it comprises further control means (21b) for said motorization means (12;112).

5. The cleaning device according to claim 1, **characterized in that** said positioning means (15) are constituted by an electric servomotor (26), which is functionally connected to a ballscrew (22), in which the lead screw (23) is rigidly coupled to said slider (13;113).

6. The cleaning device according to claim 1, **characterized in that** said comparison means (20) and said control and feedback means (21a) are integrated in a control unit (25).

7. The cleaning device according to claim 4, **characterized in that** said comparison means (20), said control and feedback means (21a) and said further control means (21b) are integrated in a control unit (25), which is built into a machine control panel (35).

8. The cleaning device according to claim 4, **characterized in that** relative sliding means (137) are provided between said motorization means (112) and said slider (113), and elastic safety means (136) suitable to protect the integrity of said screw (111) are associated with said means.

9. The cleaning device according to claim 8, **characterized in that** said elastic safety means (136) are constituted by at least one compression spring, which is interposed between the base of said motorization means (112) and said slider (113), said at least one spring being suitable to be compressed if the screw (111) and the motorization means (113) that support it stop their advancement in the mixing chamber (116).

10. The cleaning device according to claim 9, **characterized in that** it has a sensor (138) for detecting the position of said motorization means (112) with respect to said slider (113), said position sensor (138) being interfaced with said further control means (21 b) and with said comparison means (20).

11. A method for cleaning a low-pressure mixing chamber particularly for polyurethane using a cleaning device in accordance with claim 1 the steps of :
- pushing a rotating screw (11) into a mixing chamber (26)
- measuring the axial thrust of the screw (11) and/or the torque of the electric spindle (12) that turns said screw (11)
- comparing measured values of the axial thrust of the screw (11) and/or of the torque of the electric spindle (12) with the respective preset limit values
- if at least one of said measured values is not lower than the corresponding limit value, detecting the position of the screw (11) at which the limit value is exceeded
- retracting by a predefined extent the screw (11), so that the measured value load decreases below the corresponding limit value
- pushing again the screw (11) into the chamber (16).

## Patentansprüche

1. Reinigungsvorrichtung für eine Niederdruckmischkammer, insbesondere für Polyurethan, des Typs, der eine konische Mischerschnecke (11; 111) umfasst, die in Rotation angetrieben wird durch Antriebsmittel (12; 112), die starr mit einem Läufer (13; 113) gekoppelt sind, der sie auf einer Vorschubführung (14) trägt, wobei dem Läufer (13; 113) Mittel (15) zum Positionieren der Schnecke (11; 111) zwischen einer zurückgezogenen Mischposition und einer vorgeschobenen Reinigungsposition in einer Mischkammer (16) zugeordnet sind, wobei die Reinigungsvorrichtung (10) **dadurch gekennzeichnet ist, dass** mindestens eines der folgenden Mittel dem Positionierungsmittel (15) zugeordnet ist:
- Mittel zum Messen des Axialschubs (17) der Schnecke (11; 111) an den Rückständen des umgesetzten Materials, die auf den Innenwänden (18) der Mischkammer (16) vorhanden sind,
- Mittel (24) zum Messen des durch die Antriebsmittel (12; 112) erzeugten Drehmoments zum Betätigen der Reinigungsschnecke (11; 111),
wobei Mittel (19) vorgesehen sind, um die Position der Schnecke (11; 111) an dem Punkt zu erfassen, an dem der Axialschub der Schnecke (11; 111) und/oder das durch die Antriebsmittel (12; 112) erzeugte Drehmoment am höchsten ist/sind, wobei das Positionserfassungsmittel (19) und das mindestens eine von Axialschubmessmittel (17) und Drehmomentmessmittel (24) über eine Schnittstelle mit Vergleichsmitteln (20) zum Vergleichen der Messwerte von Position, Axialschub und/oder Drehmoment der Antriebsmittel (12; 112) mit festgelegten Grenzwerten für Position, Axialschub und/oder Drehmoment, und mit Steuer- und Feedbackmitteln (21a) verbunden sind, die, wenn der gemessene Axialschub und/oder das Drehmoment niedriger ist/sind als der jeweilige festgelegte Grenzwert, geeignet sind, die Positionierungsmittel (15) zu leiten, um den Läufer (13; 113) in eine Position zurückzuführen, in der der Axialschub der Schnecke (11; 111) und das von den Antriebsmitteln (12; 112) erzeugte Drehmoment niedriger sind als die jeweiligen festgelegten Grenzwerte.

2. Reinigungsvorrichtung nach Anspruch 1, **dadurch gekennzeichnet, dass** die Reinigungsschnecke (11; 111) im Wesentlichen kegelstumpfförmig ist und auch geeignet ist, die Komponenten des Polyurethans in der Mischkammer (16) zu vermischen.

3. Reinigungsvorrichtung nach Anspruch 1, **dadurch gekennzeichnet, dass** die Antriebsmittel (12; 112) durch eine elektrische Spindel gebildet sind, die geeignet ist, die Schnecke (11; 111) zu drehen und die am Läufer (13; 113) befestigt ist.

4. Reinigungsvorrichtung nach Anspruch 1, **dadurch gekennzeichnet, dass** sie ferner Steuermittel (21 b) für die Antriebsmittel (12; 112) umfasst.

5. Reinigungsvorrichtung nach Anspruch 1, **dadurch gekennzeichnet, dass** die Positionierungsmittel (15) durch einen elektrischen Servomotor (26) gebildet sind, der funktional mit einer Kugelumlaufspindel (22) verbunden ist, in der die Gewindespindel (23) starr mit dem Läufer (13; 113) gekoppelt ist.

6. Reinigungsvorrichtung nach Anspruch 1, **dadurch gekennzeichnet, dass** die Vergleichsmittel (20) und die Steuer- und Feedbackmittel (21 a) in einer Steuereinheit (25) integriert sind.

7. Reinigungsvorrichtung nach Anspruch 4, **dadurch gekennzeichnet, dass** die Vergleichsmittel (20), die Steuer- und Feedbackmittel (21 a) und die weiteren Steuermittel (21 b) in einer Steuereinheit (25) integriert sind, die in eine Maschinensteuerkonsole (35) eingebaut ist.

8. Reinigungsvorrichtung nach Anspruch 4, **dadurch gekennzeichnet, dass** Relativverschiebungsmittel (137) zwischen den Antriebsmitteln (112) und dem Läufer (113) vorgesehen sind, und elastische Sicherheitsmittel (136) den Mitteln zugeordnet sind, die zum Schutz der Unversehrtheit der Schnecke (111) geeignet sind.

9. Reinigungsvorrichtung nach Anspruch 8, **dadurch gekennzeichnet, dass** die elastischen Sicherheitsmittel (136) durch mindestens eine Kompressionsfeder gebildet sind, die zwischen die Basis der Antriebsmittel (112) und dem Läufer (113) eingesetzt ist, wobei die mindestens eine Feder zur Kompression geeignet ist, wenn die Schnecke (111) und die Antriebsmittel (113), die sie tragen, ihren Vorschub in die Mischkammer (116) beenden.

10. Reinigungsvorrichtung nach Anspruch 9, **dadurch gekennzeichnet, dass** sie einen Sensor (138) zum Erfassen der Position der Antriebsmittel (112) in Bezug auf den Läufer (113) aufweist, wobei der Positionssensor (138) mit dem weiteren Steuermittel (21 b) und dem Vergleichsmittel (20) über eine Schnittstelle verbunden ist.

11. Verfahren zum Reinigen einer Niederdruckmischkammer, insbesondere für Polyurethan, unter Verwendung einer Reinigungsvorrichtung nach Anspruch 1, umfassend die Schritte:
- Einschieben einer drehbaren Schnecke (11) in eine Mischkammer (26),
- Messen des Axialschubs der Schnecke (11) und/oder des Drehmoments der elektrischen Spindel (12), die die Schnecke (11) dreht,
- Vergleichen von Messwerten des Axialschubs der Schnecke (11) und/oder des Drehmoments der elektrischen Spindel (12) mit entsprechenden festgelegten Grenzwerten,
- wenn mindestens einer der Messwerte nicht niedriger ist als der zugehörige Grenzwert, Erfassen der Position der Schnecke (11), bei der der Grenzwert überschritten wird,
- Zurückziehen der Schnecke (11) um ein vordefiniertes Maß, so dass der gemessene Lastwert unter den zugehörigen Grenzwert fällt,
- erneutes Einschieben der Schnecke (11) in die Kammer (16).

## Revendications

1. Dispositif de nettoyage d'une chambre de mélange basse pression, en particulier pour polyuréthane, du type comprenant une vis de mélange conique (11; 111) qui est actionnée de façon rotative par des moyens de motorisation (12; 112) rigidement couplés à un coulisseau (13; 113) qui les supporte sur un guide d'avancement (14), ledit coulisseau (13; 113) étant associé à des moyens (15) de positionnement de ladite vis (11; 111) à l'intérieur d'une chambre de mélange (16), entre une position de mélange rétractée et une position de nettoyage avancée, ledit dispositif de nettoyage (10) étant **caractérisé en ce que** au moins l'un des moyens suivants est associé avec lesdits moyens de positionnement (15):
- moyens de mesure de la poussée axiale (17) de ladite vis (11; 111) sur les résidus de matériau réagi qui sont présents sur les parois internes (18) de ladite chambre de mélange (16);
- moyens (24) de mesure du couple généré par lesdits moyens de motorisation (12; 112) pour l'actionnement de ladite vis de nettoyage (11; 111),
des moyens (19) étant prévus pour détecter la position de ladite vis (11; 111) au point où la poussée axiale de la vis (11; 111) et/ou le couple généré par les moyens de motorisation (12; 112) sont/est le plus haut, lesdits moyens (19) de détection de la position et ledit au moins un desdits moyens (17) de mesure de la poussée axiale et lesdits moyens (24) de mesure du couple étant alternés avec des moyens (20) de comparaison pour comparer les valeurs mesurées de position, de poussée axiale et/ou de couple des moyens de motorisation (12; 112) avec les valeurs limites prédéfinies de position, de poussée axiale et/ou de couple, et avec des moyens (21 a) de retour et de contrôle qui sont adaptés, si la poussée axiale et/ou le couple mesuré sont/n'est pas plus bas que la valeur limite prédéfinie respective, pour gérer lesdits moyens (15) de positionnement afin de faire revenir ledit coulisseau (13; 113) à une position dans laquelle la poussée axiale de la vis (11; 111) et le couple généré par lesdits moyens de motorisation (12; 112) sont plus bas que les valeurs limites prédéfinies respectives.

2. Dispositif de nettoyage selon la revendication 1, **caractérisé en ce que** ladite vis de nettoyage (11; 111) est sensiblement de forme tronconique et est également adaptée pour mélanger les composants du polyuréthane à l'intérieur de ladite chambre de mélange (16).

3. Dispositif de nettoyage selon la revendication 1, **caractérisé en ce que** lesdits moyens de motorisation (12; 112) sont constitués par un mandrin électrique, qui est approprié à faire tourner ladite vis (11; 111) et qui est fixé audit coulisseau (13; 113).

4. Dispositif de nettoyage selon la revendication 1, **caractérisé en ce qu'**il comprend en outre des moyens (21b) de commande pour lesdits moyens de motorisation (12; 112).

5. Dispositif de nettoyage selon la revendication 1, **caractérisé en ce que** lesdits moyens de positionnement (15) sont constitués par un servomoteur électrique (26), qui est connecté de façon fonctionnelle à une vis à billes (22), dans laquelle la vis mère (23) est rigidement couplée audit coulisseau (25).

6. Dispositif de nettoyage selon la revendication 1, **caractérisé en ce que** lesdits moyens de comparaison (20) et lesdits moyens (21a) de retour et de contrôle sont intégrés dans une unité de commande (25).

7. Dispositif de nettoyage selon la revendication 4, **caractérisé en ce que** lesdits moyens de comparaison (20), lesdits moyens (21a) de retour et de contrôle et lesdits moyens (21b) de commande supplémentaires sont intégrés dans une unité de commande (25) qui est intégrée dans un tableau de commande de machine (35).

8. Dispositif de nettoyage selon la revendication 4, **caractérisé en ce que** des moyens (137) de coulissement relatifs sont prévus entre lesdits moyens de motorisation (112) et ledit coulisseau (113), et des moyens (136) de sécurité élastiques appropriés à protéger l'intégrité de ladite vis (111) sont associés avec lesdits moyens.

9. Dispositif de nettoyage selon la revendication 8, **caractérisé en ce que** lesdits moyens (136) de sécurité élastiques sont constitués par au moins un ressort de compression qui est interposé entre la base desdits moyens de motorisation (112) et ledit coulisseau (113), ledit au moins un ressort étant approprié pour être compressé si la vis (111) et les moyens de motorisation (113) qui la supportent arrêtent leur avancement dans la chambre de mélange (116).

10. Dispositif de nettoyage selon la revendication 9, **caractérisé en ce qu'**il possède un capteur (138) pour détecter la position desdits moyens de motorisation (112) par rapport audit curseur (113), ledit capteur de position (138) étant couplé auxdits moyens de contrôle supplémentaires (21 b) et auxdits moyens de comparaison (20).

11. Méthode pour nettoyer une chambre de mélange basse pression en particulier pour du polyuréthane, utilisant un dispositif de nettoyage selon la revendication 1, comprenant les étapes consistant à:
- pousser une vis rotative (11) dans une chambre de mélange (26)
- mesurer la poussée axiale de la vis (11) et/ou le couple du mandrin électrique (12) qui tourne ladite vis (11)
- comparer les valeurs mesurées de la poussée axiale de la vis (11) et/ou du couple du mandrin électrique (12) avec les valeurs limites prédéfinies respectives
- si au moins une desdits valeurs mesurées n'est pas inférieure à la valeur limite correspondante, détecter la position de la vis (11) au niveau de laquelle la valeur limite est en excès.
- rétracter selon une extension prédéfinie ladite vis (11), de sorte que la charge de la valeur mesurée diminue en dessous de la valeur limite correspondante
- pousser à nouveau la vis (11) dans la chambre (16).
